# EUROPÄISCHE PATENTSCHRIFT

(11) **EP 1 269 791 B1**
(45) Veröffentlichungstag und Bekanntmachung des Hinweises auf die Patenterteilung: **22.06.2005**
(21) Anmeldenummer: 01929246.5
(22) Anmeldetag: 16.03.2001
(51) Int. Cl.: H04Q 7/38

(54) **VERFAHREN ZUR ÜBERTRAGUNG EINER SIGNALISIERUNG**
METHOD FOR TRANSMITTING SIGNALLING
PROCEDE DE TRANSMISSION D'UNE SIGNALISATION

(30) Priorität: 28.03.2000 DE 10015317; 30.08.2000 DE 10042511
(43) Veröffentlichungstag der Anmeldung: 02.01.2003
(73) Patentinhaber: ROBERT BOSCH GMBH, 70442 Stuttgart (DE)
(72) Erfinder: KOWALEWSKI, Frank, 38288 Salzgitter (DE); BAER, Siegfried, 75179 Pforzheim (DE); GOTTSCHALK, Thomas, 38126 Braunschweig (DE); CHOI, Hyung-Nam, 22117 Hamburg (DE)
(86) Internationale Anmeldenummer: PCT/DE2001/001020
(87) Internationale Veröffentlichungsnummer: WO 2001/074106

(56) Entgegenhaltungen:
- EP-A- 0 841 763
- WO-A-01/17304
- ADACHI F ET AL: "Tree-structured generation of orthogonal spreading codes with different lengths for forward link of DS-CDMA mobile radio" ELECTRONICS LETTERS, IEE STEVENAGE, GB, Bd. 33, Nr. 1, 2. Januar 1997 (1997-01-02), Seiten 27-28, XP006006893 ISSN: 0013-5194
- KAROL M J ET AL: "TIME-FREQUENCY-CODE SLICING: EFFICIENTLY ALLOCATING THE COMMUNICATIONS SPECTRUM TO MULTIRATE USERS" IEEE TRANSACTIONS ON VEHICULAR TECHNOLOGY, IEEE INC. NEW YORK, US, Bd. 46, Nr. 4, 1. November 1997 (1997-11-01), Seiten 818-826, XP000754819 ISSN: 0018-9545

## Beschreibung

### Stand der Technik

Die Erfindung geht von einem Verfahren zur Übertragung einer Signalisierung nach der Gattung des Hauptanspruchs aus.

Verfahren zur Übertragung einer Signalisierung zwischen einer Mobilstation und einer Basisstation in einem Mobilfunknetz sind beispielsweise bereits aus der Veröffentlichung "Fast Uplink Signalling Mechanism for FDD and TDD Systems", Tdoc SMG2 UMTS-L1 227/98, Philips Research Laboratories, 1998 und der Veröffentlichtung EP0841763 bekannt.

### Vorteile der Erfindung

Das erfindungsgemäße Verfahren mit den Merkmalen des Hauptanspruchs hat demgegenüber den Vorteil, daß die Signalisierung in mindestens einem vorgegebenen Zeitschlitz übertragen wird, wobei jeder in einer Funkzelle der Basisstation angeordneten Mobilstation eine unterschiedliche Signalisierung zugeordnet wird, so daß über den mindestens einen vorgegebenen Zeitschlitz übertragene Signalisierungen verschiedener Mobilstationen in der Basisstation unterschieden werden können. Auf diese Weise läßt sich eine eindeutige Signalisierung verwirklichen. Eine Wiederholung der Übertragung der Signalisierung ist daher in der Regel nicht erforderlich. Die Signalisierung führt somit besonders schnell zum gewünschten Ergebnis. Dabei ist eine geringstmögliche Verwendung von Übertragungsressourcen sichergestellt. Eine Signalisierung mehrerer Mobilstationen ist dabei durch Verwendung nur eines einzigen gemeinsamen Zeitschlitzes möglich.

Durch die in den Unteransprüchen aufgeführten Maßnahmen sind vorteilhafte Weiterbildungen und Verbesserungen des im Hauptanspruch angegebenen Verfahrens möglich.

Vorteilhaft ist es, dass den Mobilstationen jeweils eine Signalisierung in Form eines unterschiedlichen Codes zugeordnet wird. Dies stellt besonders in einem auf Codevielfachzugriff mit orthogonalen Codes basierten Mobilfunksystem eine Möglichkeit dar, eine eindeutige Signalisierung unter Verwendung der verfügbaren Codes einfach und effizient zu realisieren, ohne daß zusätzliche Übertragungsressourcen nennenswert beansprucht werden.

Ein weiterer Vorteil besteht darin, dass eine in der Basisstation empfangene Signalisierung mit sämtlichen den Mobilstationen zugeordneten Codes korreliert wird, um die der empfangenen Signalisierung zugeordnete Mobilstation zu ermitteln. Auf diese Weise kann die Basisstation die die Signalisierung absendende Mobilstation eindeutig bestimmen.

Vorteilhaft ist besonders, dass den Mobilstationen jeweils eine Zeitverschiebung zugeordnet wird, um die eine vorgegebene Signalisierungssequenz verschoben in dem mindestens einen vorgegebenen Zeitschlitz übertragen wird. Auf diese Weise ist eine alternative Möglichkeit der eindeutigen und effizienten Signalisierung gegeben, bei der lediglich ein Zeitschlitz und eine vorgegebene Signalisierungssequenz erforderlich ist.

Ein weiterer Vorteil besteht darin, dass die vorgegebene Signalisierungssequenz durch einen vorgegebenen Code gespreizt übertragen wird. Auf diese Weise läßt sich eine Übertragung der Signalisierung bei minimaler Beanspruchung der Übertragungskapazität realisieren, besonders dann, wenn der vorgegebene Code aus einem Satz orthogonaler Codes beispielsweise für die Anwendung in einem Codevielfachzugriffssystem entnommen wird.

Vorteilhaft ist weiterhin, dass in der Basisstation aus dem zeitlichen Amplitudenverlauf der empfangenen vorgegebenen Signalisierungssequenz die verwendete Zeitverschiebung detektiert wird, um die zugeordnete Mobilstation zu ermitteln. Auf diese Weise kann die Basisstation die die Signalisierung absendende Mobilstation eindeutig bestimmen.

Ein weiterer Vorteil besteht darin, dass die Signalisierungen mit einer Leistung übertragen werden, die wesentlich kleiner ist als die Leistung für die Übertragung von Nutzdaten. Auf diese Weise wird die durch die Signalisierung verursachte zusätzliche Interferenz minimiert.

Vorteilhaft ist auch, dass zumindest eine der Signalisierungen zusammen mit einer anderen Signalisierung oder mit Nutzdaten einer bereits bestehenden Verbindung in dem mindestens einen vorgegebenen Zeitschlitz übertragen wird. Auf diese Weise wird Übertragungskapazität eingespart.

### Zeichnung

Ausführungsbeispiele der Erfindung sind in der Zeichnung dargestellt und in der nachfolgenden Beschreibung näher erläutert. Es zeigen Figur 1 ein vereinfacht dargestelltes Mobilfunksystem, Figur 2 den Aufbau eines Bursts für eine Übertragung in einem Zeitschlitzduplex-Betriebsmodus, Figur 3 den Aufbau eines Übertragungsrahmens im Zeitschlitzduplex-Betriebsmodus und Figur 4 einen Codebaum zur Erzeugung eines Codes.

### Beschreibung der Ausführungsbeispiele

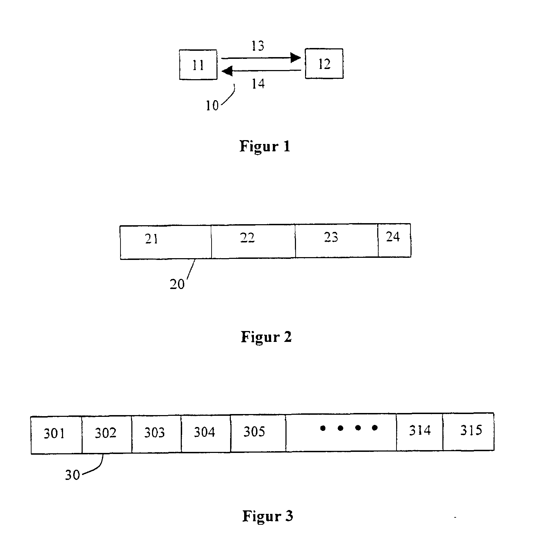

In einem Mobilfunksystem 10, das beispielsweise nach dem GSM-Standard (Global System for Mobile Communication) oder nach dem UMTS-Standard (Universal Mobile Telecommunications System) ausgebildet sein kann, müssen sowohl in einer Downlink-Übertragungsrichtung 13 von einer ortsfesten Basisstation 11 zu einer Mobilstation 12 gemäß Figur 1 als auch in einer Uplink-Übertragungsrichtung 14 von der Mobilstation 12 zur Basisstation 11 neben den sogenannten Nutzdaten, die beispielsweise in Form von Sprachsignalen vorliegen, auch Signalisierungsdaten z.B. für Handover-Prozeduren oder den Aufbau neuer Kanäle übertragen werden. Im folgenden wird die Erfindung beispielhaft anhand eines Mobilfunknetzes auf der Grundlage eines Mobilfunksystems 10 nach dem UMTS-Standard beschrieben, das im folgenden als UMTS-Mobilfunksystem 10 bezeichnet wird.

Beim UMTS-Mobilfunksystem 10 sind zwei Modi für Übertragungen über die Luftschnittstelle vorgesehen: Bei einem FDD-Modus (Frequency Division Duplex) existieren zwei unterschiedliche Frequenzen für die Uplink-Übertragungsrichtung 14 und die Downlink-Übertragungsrichtung 13. Bei einem TDD-Modus (Time Division Duplex) wird für beide Übertragungsrichtungen nur eine Trägerfrequenz verwendet, wobei durch Zuweisung von Zeitschlitzen eine Trennung der Downlink-Übertragungsrichtung 13 und der Uplink-Übertragungsrichtung 14 erfolgt.

Die Signale verschiedener Teilnehmer des Mobilfunknetzes werden durch Spreizen mit orthogonalen Codes voneinander getrennt. Beim TDD-Modus werden die so gespreizten Signale der verschiedenen Teilnehmer innerhalb des gleichen Zeitschlitzes übertragen.

Im folgenden wird beispielhaft angenommen, dass das in Figur 1 vereinfacht dargestellte UMTS-Mobilfunksystem 10 nach dem TDD-Modus ausgebildet ist. Figur 3 zeigt den Aufbau eines dafür verwendeten Übertragungsrahmens 30. Jeder Übertragungsrahmen hat in diesem Beispiel eine zeitliche Länge von 10 ms und besteht aus insgesamt 15 Zeitschlitzen 301, 302,..., 315. Ein erster Zeitschlitz 301 soll dabei für die Übertragung in Uplink-Übertragungsrichtung 14 und ein zweiter Zeitschlitz 303 für die Übertragung in Downlink-Übertragungsrichtung 13 reserviert sein. Innerhalb eines jeden der Zeitschlitze 301, 302,..., 315 kann genau ein sogenannter TDD-Burst 20 gemäß Figur 2 übertragen werden. Dieser besteht aus zwei Datenblöcken 21, 23 für die Datenübertragung, einem Midamble-Block 22 für die Kanalschätzung und einem Schutzabstand 24.

Innerhalb eines jeden der Zeitschlitze 301, 302,..., 315 können Nutzdaten von höchstens 16 Teilnehmern nach den Prinzipien eines Codevielfachzugriffsystems CDMA (Code Division Multiple Access) übertragen werden. Um dies erreichen zu können, müssen die zu übertragenden Nutzdaten der einzelnen Teilnehmer vor ihrer Überlagerung im entsprechenden Zeitschlitz gespreizt werden. In

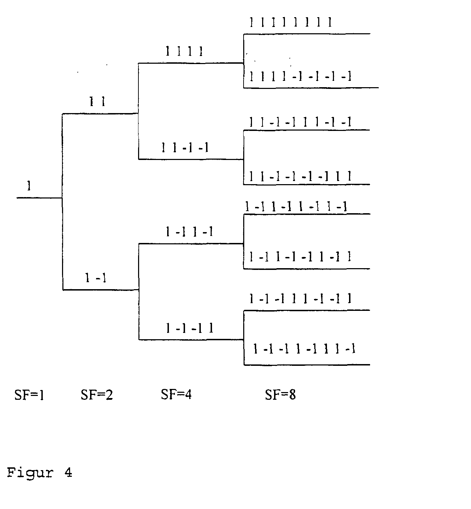

Figur 4 ist ein Code-Baum abgebildet, mit dessen Hilfe sogenannte OVSF-Codes (Orthogonal Variable Spreading Factor) zum Spreizen der zu übertragenden Nutzdaten erzeugt werden.

Neben den Nutzdaten werden zwischen der Mobilstation 12 und der Basisstation 11 auch Signalisierungen übertragen. Diese können beispielsweise dazu dienen, einen Übertragungskanal anzufordern, einen Befehl zur Regelung der Sendeleistung zu versenden oder ein Referenzsignal für eine Kanalschätzung zu übertragen. In allen genannten Fällen soll in der die Signalisierung empfangenden Station eine Reaktion auf die Signalisierung bewirkt werden. Diese besteht dann für die beispielhaft aufgeführten Fälle entweder in der Zuweisung eines Übertragungskanals, in der Einstellung der Sendeleistung oder in der Schätzung der Kanalimpulsantwort anhand des empfangenen Referenzsignals beispielsweise zur Verwendung für eine Vorverzerrung gemäß eines JP-Verfahrens (Joint Predistortion). Im folgenden wird beispielhaft anhand einer Signalisierung zur Anforderung eines Übertragungskanals beschrieben, wie solche Signalisierungen von der Mobilstation 12 zur Basisstation 11 übertragen werden.

Gemäß einem ersten Ausführungsbeispiel werden die Signalisierungen aus den beschriebenen OVSF-Codes erzeugt. Der in Figur 4 gezeigte Code-Baum zeigt die Erzeugung der OVSF-Codes bis zu einem Spreizfaktor SF = 8. Beim TDD-Modus des UMTS-Mobilfunksystems 10 sind derzeit OVSF-Codes mit Spreizfaktoren SF∈{1, 2, 4, 8, 16} möglich. Mit Hilfe der OVSF-Codes lassen sich orthogonale Codesequenzen erzeugen, wobei eine wesentliche Eigenschaft darin besteht, dass auch Codes unterschiedlicher Länge zueinander orthogonal sind.

Im vorliegenden ersten Ausführungsbeispiel soll eine Übertragung der Signalisierungen nur im ersten Zeitschlitz 301 möglich sein. Innerhalb des ersten Zeitschlitzes 301 werden aus einem bestimmten, vorher festgelegten Spreizcode der Länge 16 und damit dem Spreizfaktor SF = 16 sämtliche Signalisierungen erzeugt. Beispielsweise wird der letzte Spreizcode mit dem Spreizfaktor SF = 16 ausgewählt, der in Figur 4 an unterster Stelle bei entsprechender Fortsetzung des bis zum Spreizfaktor SF = 8 dargestellten Code-Baumes stehen würde. Dieser unterste Zweig des Code-Baums mit dem Spreizfaktor SF = 16 wird nun bis zum Spreizfaktor bzw. zur Länge 256 erweitert. Insgesamt stehen damit innerhalb des ersten Zeitschlitzes 301 16 Codes für die Signalisierung zur Verfügung. Anders ausgedrückt werden 16 Codes mit Spreizfaktor 256 der OVSF-Codes für die Signalisierung verwendet.

Mit diesen Codes der Länge 256 für die Signalisierung wird nun ein Signalisierungs-Burst aufgebaut, der die gleiche Struktur hat, wie der in Figur 2 dargestellte TDD-Burst 20. Dabei wird der Code für die Signalisierung innerhalb der Datenblöcke 21, 23 solange wiederholt, bis diese aufgefüllt sind, wobei der Code für die Signalisierung bei der letzten benötigten Wiederholung zur Auffüllung der Datenblöcke 21, 23 abgeschnitten werden kann. In dem ersten Zeitschlitz 301 wird jedem solchermaßen als Signalisierungs-Burst ausgebildeten TDD-Burst 20 ebenfalls der Midamble-Block 22 zugewiesen.

Der Mobilstation 12 wird z.B. beim Einbuchen in die Funkzelle der Basisstation 11 derjenige der beschriebenen Codes zur Signalisierung zugewiesen bzw. zugeordnet, der im Code-Baum gemäß Figur 4 bei dem Spreizfaktor SF = 256 ganz unten angeordnet wäre. Es könnte zusätzlich vereinbart werden, daß die Mobilstation 12 die Berechtigung zur Signalisierung überhaupt besitzt. Mobilstationen ohne Berechtigung zur Signalisierung werden dann keine Codes zur Signalisierung zugewiesen. Jeder zur Signalisierung berechtigten Mobilstation wird ein unterschiedlicher Code zur Signalisierung zugeordnet. Benötigt die Mobilstation 12 nun einen Kanal für eine Nutzdatenübertragung in der Uplink-Übertragungsrichtung 14, im folgenden als Uplink-Kanal bezeichnet, so sendet sie im ersten Zeitschlitz 301 den ihr zugewiesenen Code zur Signalisierung, um einen solchen Kanal anzufordern, woraufhin die Basisstation 11 der Mobilstation 12 die Parameter für einen solchen Uplinkkanal im zweiten Zeitschlitz 303 mitteilt. Der zugeteilte Uplink-Kanal kann dabei ebenfalls im ersten Zeitschlitz 301 liegen, so dass die Mobilstation 12 im darauffolgenden Übertragungsrahmen 30 ebenfalls im ersten Zeitschlitz 301 mit der Nutzdatenübertragung beginnen kann.

Die Sendeleistung des Signalisierungs-Bursts 20 liegt wesentlich unter der Sendeleistung eines normalen Bursts für die Übertragung von Nutzdaten. Damit ist die durch Verwendung des Signalisierungs-Bursts 20 verursachte zusätzliche Interferenz in Uplink-Übertragungsrichtung 14 minimal. Die Detektion des in der Basisstation 11 empfangenen Codes zur Signalisierung und damit der dieser Signalisierung zugeordneten Mobilstation 12 erfolgt durch Korrelation mit den 16 verschiedenen vorgegebenen Codes zur Signalisierung. Alternativ können die Codes zur Signalisierung auch mit einem JD-Verfahren (Joint Detection) detektiert werden.

Für den Fall, dass die vorgegebenen 16 Codes zur Signalisierung im ersten Zeitschlitz 301 als einzigem zur Signalisierung verwendeten Zeitschlitz pro Übertragungsrahmen 30 zuwenig sind, könnte die Übertragung der Signalisierung auf zusätzliche Zeitschlitze in Uplink-Übertragungsrichtung 14 ausgedehnt werden. Ebenfalls wäre es denkbar, die Anzahl der vorgegebenen Codes zur Signalisierung zu erhöhen, indem im Code-Baum zur Erzeugung dieser Codes zur Signalisierung noch höhere Spreizfaktoren als 256 benutzt werden. Z.B. stünden bei einer Erweiterung auf den Spreizfaktor SF = 1024 insgesamt 64 Codes zur Signalisierung zur Verfügung.

Gemäß einem zweiten Ausführungsbeispiel kann die Signalisierung noch in einer anderen Weise realisiert werden. Im ersten Ausführungsbeispiel dienen die OVSF-Codes direkt als Codes zur Signalisierung. Im zweiten Ausführungsbeispiel soll nun für die Signalisierung zwar ebenfalls ein bestimmter OVSF-Code mit dem Spreizfaktor SF = 16 reserviert werden, z.B. der unterste Code im Code-Baum mit dem Spreizfaktor SF = 16. Dieser wird aber zum Spreizen einer für alle Signalisierungen und somit für alle in der Funkzelle der Basisstation 11 zur Signalisierung berechtigten Mobilstationen vorgegebenen Signalisierungssequenz verwendet. Diese Signalisierungssequenz ist eine für alle zur Signalisierung berechtigten Mobilstationen in der Funkzelle der Basisstation 11 gleiche, festgelegte Symbolfolge mit guten Autokorrelationseigenschaften. Die Signalisierungssequenz wird mit dem dafür vorgegebenen bzw. reservierten OVSF-Code gespreizt und in den Datenblöcken 21 und 23 des Signalisierungs-Bursts 20 übertragen. Die Signalisierungssequenz soll aus so vielen Symbolen bestehen, dass sie mit dem Spreizfaktor SF = 16 gespreizt genauso lange andauert, wie die Datenblöcke 21 und 23 zusammen. Jeder Mobilstation, die diese Signalisierungssequenz verwendet, wird eine unterschiedliche Zeitverschiebung für den Start der Signalisierungssequenz zugewiesen. Die Mobilstation 12 beginnt mit dem Start der Signalisierungssequenz exakt mit dem Start des in Figur 2 dargestellten und zur Signalisierung verwendeten Signalisierungs-Bursts 20. Eine zweite, nicht dargestellte Mobilstation in der Funkzelle der Basisstation 11 beginnt mit dem Start der Signalisierungssequenz um z.B. 4 Symbole später. Dies entspricht einer Zeitverschiebung von 64 Chips. Da die Signalisierungssequenz aber 4 Symbole mehr enthält, als in den Datenblöcken 21, 23 von der genannten Zeitverschiebung an übertragen werden können, werden die verbleibenden 4 Symbole am Anfang des Signalisierungs-Bursts 20 übertragen. Die Signalisierungssequenz wird also zyklisch verschoben für verschiedene Mobilstationen übertragen, wobei die jeweilige Zeitverschiebung die dieser Zeitverschiebung zugeordnete Mobilstation 12 eindeutig identifiziert. Die Zeitverschiebung für die jeweiligen Mobilstationen besteht aus Vielfachen von 4 Symbolen, bzw. Vielfachen von 64 Chips nach dem Spreizen mit dem Spreizfaktor SF = 16. Dieser Wert von 4 Symbolen entspricht einer maximal auftretenden Länge des Übertragungskanals von 64 Chips. Daraus ergeben sich derzeit 30 mögliche verschiedene Zeitverschiebungen bzw. 30 unterschiedliche Mobilstationen pro für die Signalisierung genutztem Zeitschlitz in der Uplink-Übertragungsrichtung 14. Die zyklisch verschobene Signalisierungssequenz wird dann noch mit dem beschriebenen vorgegebenen OVSF-Code gespreizt, damit die Orthogonalität gegenüber den anderen im gleichen Zeitschlitz übertragenen Signalen sichergestellt wird. Auch hier wird jedem Signalisierungs-Burst 20 ein eigener Midamble-Block 22 zugewiesen.

Die Sendeleistung dieses Signalisierungs-Bursts 20 ist ebenfalls sehr klein im Vergleich zu Nutzdaten-Bursts. Die Detektion der empfangenen Signalisierungs-Bursts 20 in der Basisstation 11 erfolgt nach dem Entspreizen z.B. durch ein Matched Filter mit Peak-Detektion. Je nachdem, an welcher zeitlichen Stelle im Amplitudenverlauf des empfangenen und entspreizten Signalisierungs-Bursts 20 ein Maximumwert auftritt, kann auf die zugrundeliegende Zeitverschiebung und die dieser zugeordnete sendende Mobilstation zurückgeschlossen werden und entsprechend der Aufbau eines durch die Signalisierung angeforderten Uplink-Kanals eingeleitet werden. Die Entspreizung der Signalisierungs-Bursts kann auch mit einem JD-Verfahren vorgenommen werden.

In beiden Ausführungsbeispielen kann die Signalisierung besonders schnell detektiert werden, wenn die Übertragungsqualität es zulässt: Reicht die Detektionsqualität innerhalb des ersten Datenblocks 21 schon aus, um eine sichere Entscheidung treffen zu können, kann auf die Auswertung des zweiten Datenblocks 23 verzichtet werden.

In einer weiteren Ausführungsform kann es zusätzlich auch vorgesehen sein, die gespreizte Signalisierungssequenz in nur einem der beiden Datenblöcke 21, 23 zu übertragen. Dazu wird die Signalisierungssequenz im Vergleich zur oben beschriebenen Ausführungsform in ihrer Länge halbiert. Die verschiedenen Mobilstationen können somit in der Basisstation 11 zusätzlich auch danach unterschieden werden, in welchem der beiden Datenblöcke 21, 23 die Signalisierungssequenz übertragen und in der Basisstation 11 empfangen wurde.

Durch die starre Aufteilung der Zeitschlitze auf die unterschiedlichen Übertragungsrichtungen, nämlich der Downlink-Übertragungsrichtung 13 oder der Uplink-Übertragungsrichtung 14, kann der Vorteil der schnellen Signalisierung beispielsweise in Uplink-Übertragungsrichtung 14 unter Umständen eingeschränkt sein, insbesondere dann, wenn nur ein Zeitschlitz in Uplink-Übertragungsrichtung 14 pro Übertragungsrahmen 30 allokiert ist.

Dem kann begegnet werden, indem die Übertragung der Signalisierung gemäß dem ersten oder dem zweiten Ausführungsbeispiel in Uplink-Übertragungsrichtung 14 auch unter Verwendung eines Zeitschlitzes in Downlink-Übertragungsrichtung 13 ermöglicht wird. Generell kann die Signalisierung zusammen mit einer anderen Signalisierung oder mit Nutzdaten einer bereits bestehenden Verbindung in einem gemeinsamen Zeitschlitz übertragen werden.

Durch die vorgesehene geringe Sendeleistung für die Übertragung des Signalisierungs-Bursts 20 ist nur eine geringe zusätzliche Interferenz zu erwarten. Dabei muss aber sowohl im ersten als auch im zweiten Ausführungsbeispiel sichergestellt sein, dass der für die Übertragung der Signalisierung reservierte Spreizcode mit dem Spreizfaktor SF = 16 nicht in der Downlink-Übertragungsrichtung 13 verwendet wird.

Die Verwendung eines gemeinsamen Zeitschlitzes zur Signalisierung in der beschriebenen Weise bildet einen eigenen Sigalisierungskanal, der für die Uplink-Übertragungsrichtung 14 auch als FAUSCH (Fast Uplink Signalling Channel) bezeichnet wird. Obwohl mit dem FAUSCH ein neuer Kanal in der Uplink-Übertragungsrichtung 14 eingeführt wird, sind die notwendigen Änderungen an der Mobilstation 12 und der Basisstation 11 nur gering.

Vorteilhaft bei dem erfindungsgemäßen Verfahren ist die Möglichkeit der Mobilstation 12, im TDD-Modus beispielsweise eine 1-Bit Signalisierung ohne zeitliche Verzögerung in dem vorgesehenen bzw. vorgegebenen gemeinsamen ersten Zeitschlitz 301 an die Basisstation 11 zu senden, wobei die Signalisierung dann in der Basisstation 11 zu einer vorher festgelegten Reaktion führt und gleichzeitig keine signifikante Verschlechterung andere Kanäle darstellt.

## Patentansprüche

1. Verfahren zur Übertragung einer Signalisierung zwischen einer Mobilstation (12) und einer Basisstation (11) in einem Mobilfunknetz, wobei die Signalisierung in mindestens einem vorgegebenen Zeitschlitz (301) übertragen wird, **dadurch gekennzeichnet, dass** jeder in einer Funkzelle der Basisstation (11) angeordneten Mobilstation (12) eine unterschiedliche Signalisierung zugeordnet wird, wobei den Mobilstationen (12) jeweils eine Signalisierung in Form eines unterschiedlichen Codes zugeordnet wird oder wobei den Mobilstationen jeweils eine Zeitverschiebung zugeordnet wird, um die eine vorgegebene Signalisierungssequenz verschoben in dem mindestens einen vorgegebenen Zeitschlitz (301) übertragen wird, so dass über den mindestens einen vorgegebenen Zeitschlitz übertragene Signalisierungen verschiedener Mobilstationen in der Basisstation (11) unterschieden werden können.

2. Verfahren nach Anspruch 1, **dadurch gekennzeichnet, dass** ausgehend von einem vorgegebenen Spreizcode vorgegebener Länge die unterschiedlichen Signalisierungen dadurch erzeugt werden, dass der vorgegebene Spreizcode in seiner Länge erweitert wird, um in mehrere, insbesondere orthogonale, Codes zu verzweigen.

3. Verfahren nach Anspruch 2, **dadurch gekennzeichnet, dass** eine in der Basisstation (11) empfangene Signalisierung mit sämtlichen den Mobilstationen zugeordneten Codes korreliert wird, um die der empfangenen Signalisierung zugeordnete Mobilstation zu ermitteln.

4. Verfahren nach einem der vorherigen Ansprüche, **dadurch gekennzeichnet, dass** die vorgegebene Signalisierungssequenz durch einen vorgegebenen Code gespreizt übertragen wird.

5. Verfahren nach einem der vorherigen Ansprüche, **dadurch gekennzeichnet, dass** in der Basisstation aus dem zeitlichen Amplitudenverlauf der empfangenen vorgegebenen Signalisierungssequenz die verwendete Zeitverschiebung detektiert wird, um die zugeordnete Mobilstation zu ermitteln.

6. Verfahren nach Anspruch 4 oder 5, **dadurch gekennzeichnet, dass** die gespreizte Signalisierungssequenz in nur einem von zwei Datenblöcken (21, 23) eines in dem mindestens einen vorgegebenen Zeitschlitz (301) angeordneten Bursts (20) übertragen wird.

7. Verfahren nach Anspruch 6, **dadurch gekennzeichnet, dass** in der Basisstation (11) derjenige der beiden Datenblöcke (21, 23) detektiert wird, in dem die Signalisierungssequenz übertragen wurde, um die zugeordnete Mobilstation zu ermitteln.

8. Verfahren nach einem der vorherigen Ansprüche, **dadurch gekennzeichnet, dass** die Signalisierungen mit einer Leistung übertragen werden, die wesentlich kleiner ist als die Leistung für die Übertragung von Nutzdaten.

9. Verfahren nach einem der vorherigen Ansprüche, **dadurch gekennzeichnet, dass** zumindest eine der Signalisierungen zusammen mit einer anderen Signalisierung oder mit Nutzdaten einer bereits bestehenden Verbindung in dem mindestens einen vorgegebenen Zeitschlitz (301) übertragen wird.

10. Verfahren nach einem der vorherigen Ansprüche, **dadurch gekennzeichnet, dass** das Mobilfunknetz nach einem CDMA- TDD-Verfahren (CDMA = Code Division Multiple Access; TDD = Time Division Duplex) unter Verwendung orthogonaler Codes betrieben wird.

11. Verfahren nach einem der vorherigen Ansprüche, **dadurch gekennzeichnet, dass** mit der Signalisierung eine Anforderung eines Übertragungskanals für die Einrichtung einer Verbindung zwischen der Mobilstation (12) und der Basisstation (11) übertragen wird.

12. Verfahren nach einem der vorherigen Ansprüche, **dadurch gekennzeichnet, dass** mit der Signalisierung ein Befehl zur Regelung der Sendeleistung übertragen wird.

13. Verfahren nach einem der vorherigen Ansprüche, **dadurch gekennzeichnet, dass** mit der Signalisierung ein Referenzsignal für eine Kanalschätzung übertragen wird.

## Claims

1. Method for transmission of signalling between a mobile station (12) and a base station (11) in a mobile radio network, with the signalling being transmitted in at least one predetermined time slot (301), **characterized in that** each mobile station (12) which is arranged in a radio cell of the base station (11) is allocated different signalling, with the mobile stations (12) each being allocated signalling in the form of a different code, or with the mobile stations each being allocated a time shift through which a predetermined signalling sequence is transmitted, shifted in the at least one predetermined time slot (301) such that transmitted signalling from different mobile stations can be distinguished in the base station (11) via the at least one predetermined time slot.

2. Method according to Claim 1, **characterized in that** the different signallings are produced on the basis of a predetermined spreading code of predetermined length, **in that** the length of the predetermined spreading code is extended in order to branch into two or more, in particular orthogonal, codes.

3. Method according to Claim 2, **characterized in that** a signalling which is received in the base station (11) is correlated with all the codes which have been allocated to the mobile stations, in order to determine the mobile station which is associated with the received signalling.

4. Method according to one of the preceding claims, **characterized in that** the predetermined signalling sequence is transmitted having been spread by means of a predetermined code.

5. Method according to one of the preceding claims, **characterized in that** the time shift that has been used is detected in the base station from the time amplitude profile of the received predetermined signalling sequence, in order to determine the associated mobile station.

6. Method according to Claim 4 or 5, **characterized in that** the spread signalling sequence is transmitted in only one of two data blocks (21, 23) of a burst (20) which is arranged in the at least one predetermined time slot (301).

7. Method according to Claim 6, **characterized in that** the base station (11) detects that one of the two data blocks (21, 23) in which the signalling sequence was transmitted, in order to determine the associated mobile station.

8. Method according to one of the preceding claims, **characterized in that** the signalling is transmitted at a power level which is considerably lower than the power level for the transmission of payload data.

9. Method according to one of the preceding claims, **characterized in that** at least one of the signallings is transmitted together with different signalling or with payload data for an already existing connection in the at least one predetermined time slot (301).

10. Method according to one of the preceding claims, **characterized in that** the mobile radio network is operated on the basis of a CDMA-TDD method (CDMA = Code Division Multiple Access; TDD = Time Division Duplex), using orthogonal codes.

11. Method according to one of the preceding claims, **characterized in that** the signalling is used to transmit a request of a transmission channel with the device for a connection between the mobile station (12) and the base station (11).

12. Method according to one of the preceding claims, **characterized in that** the signalling is used to transmit a command in order to control the transmission power.

13. Method according to one of the preceding claims, **characterized in that** the signalling is used to transmit a reference signal for channel estimation.

## Revendications

1. Procédé de transmission d'une signalisation entre une station mobile (12) et une station de base (11) dans un réseau de téléphonie mobile, selon lequel la signalisation est transmise dans un créneau temporel prédéfini (301),
**caractérisé en ce qu'**
une signalisation différente est associée à chaque station mobile (12) placée dans une cellule radio de la station de base (11), une signalisation sous forme d'un code différent est alors respectivement associée aux stations mobiles (12) ou un décalage dans le temps est respectivement associé aux stations mobiles et une séquence de signalisation prédéfinie est transmise dans le créneau temporel (301) au moins au nombre d'un en étant décalée selon ledit décalage, de sorte que dans la station de base (1) on peut faire la distinction entre les signalisations transmises des différentes stations mobiles, pendant au moins un intervalle de temps prédéfini.

2. Procédé selon la revendication 1,
**caractérisé en ce qu'**
à partir d'un code d'extension prédéfini de longueur prédéfinie, les différentes signalisations sont produites de telle manière que le code d'extension prédéfini est étendu en longueur pour se ramifier en plusieurs codes, en particulier orthogonaux.

3. Procédé selon la revendication 2,
**caractérisé en ce qu'**
une signalisation reçue dans la station de base (11) est corrélée à tous les codes associés aux stations mobiles afin de déterminer la station mobile qui est associée à la signalisation reçue.

4. Procédé selon l'une des revendications précédentes,
**caractérisé en ce que**
la séquence prédéfinie de signalisations est transmise de façon étendue par un code prédéfini.

5. Procédé selon l'une des revendications précédentes,
**caractérisé en ce qu'**
à partir de la variation temporelle des amplitudes dans la séquence prédéfinie de signalisation reçue, on détecte dans la station de base le décalage temporel utilisé afin de déterminer la station mobile associée.

6. Procédé selon la revendication 4 ou 5,
**caractérisé en ce que**
la séquence de signalisation étendue est transmise dans un seul des deux blocs de données (21, 23) d'une salve (20) placée au moins dans le créneau temporel (301) prédéfini.

7. Procédé selon la revendication 6,
**caractérisé en ce qu'**
on détecte dans la station de base (11) celui des deux blocs de données (21, 23) dans lequel la séquence de signalisation a été transmise afin de déterminer la station mobile associée.

8. Procédé selon l'une des revendications précédentes,
**caractérisé en ce que**
les signalisations sont transmises selon une puissance qui est notablement plus faible que la puissance pour transmettre des données utiles.

9. Procédé selon l'une des revendications précédentes,
**caractérisé en ce qu'**
au moins une des signalisations, conjointement avec une autre signalisation ou avec des données utiles d'une liaison déjà existante, est transmise au moins dans le créneau temporel (301) prédéfini.

10. Procédé selon l'une des revendications précédentes,
**caractérisé en ce que**
le réseau de téléphonie mobile est exploité selon un procédé CDMA-TDD (CDMA = Code Division Multiple Access, accès multiple à répartition par code ; TDD = Time Division Duplex, mode duplex en répartition dans le temps) en utilisant des codes orthogonaux.

11. Procédé selon l'une des revendications précédentes,
**caractérisé en ce qu'**
on transmet avec la signalisation une demande concernant un canal de transmission pour établir une liaison entre la station mobile (12) et la station de base (11).

12. Procédé selon l'une des revendications précédentes,
**caractérisé en ce qu'**
on transmet avec la signalisation une instruction pour régler la puissance d'émission.

13. Procédé selon l'une des revendications précédentes,
**caractérisé en ce qu'**
on transmet avec la signalisation un signal de référence pour évaluer le canal.
